# EUROPÄISCHE PATENTANMELDUNG

(11) **EP 1 357 328 A2**
(43) Veröffentlichungstag der Anmeldung: **29.10.2003**
(21) Anmeldenummer: 03008966.8
(22) Anmeldetag: 17.04.2003
(51) Int. Cl.: F17C 13/00, F17C 13/02

(54) **Überwachung des Vakuums von doppelwandigen Behältern und Leitungen**

(30) Priorität: 22.04.2002 DE 10217865
(71) Anmelder: Linde Aktiengesellschaft, 65189 Wiesbaden (DE)
(72) Erfinder: Trill, Rolf, 82031 Grünwald (DE)
(74) Vertreter: Zahn, Christoph

(57) **Zusammenfassung**

Es werden ein Verfahren sowie eine Anordnung zum Überwachen des Zwischenraumvakuums eines doppelwandigen Behälters, insbesondere eines Speicherbehälters für kryogene Medien, oder einer doppelwandigen Leitung beschrieben.

Erfindungsgemäß wird mittels einer auf der Außenwand (2) des doppelwandigen Behälters (1) oder der doppelwandigen Leitung angebrachten Temperaturmessvorrichtung (6) die Temperatur der Außenwand (2) ermittelt.

Zusätzlich zu dem mittels der auf der Außenwand (2) des doppelwandigen Behälters (1) oder der doppelwandigen Leitung angebrachten Temperaturmessvorrichtung (6) ermittelten ersten Temperaturwert kann in der Umgebung des Behälters (1) oder der Leitung ein zweiter Temperaturwert ermittelt und die beiden Temperaturwerte miteinander verglichen werden.

## Beschreibung

Die Erfindung betrifft ein Verfahren sowie eine Anordnung zum Überwachen des Zwischenraumvakuums eines doppelwandigen Behälters, insbesondere eines Speicherbehälters für kryogene Medien, oder einer doppelwandigen Leitung.

Im Folgenden werden bei den Bezeichnungen spezieller kryogener Medien entsprechend ihrem Aggregatzustand die Buchstaben "G" für "gasförmig" und "L" für "flüssig" bzw. "liquid" vorangestellt; also z. B. GH₂ bzw. LH₂ für gasförmigen bzw. flüssigen Wasserstoff. Des Weiteren werden die Begriffe "CNG" und "LNG" für komprimiertes bzw. verflüssigtes Erdgas verwendet.

Insbesondere Wasserstoff und Erdgas gewinnen gegenwärtig durch den steigenden Energiebedarf und das gestiegene Umweltbewußtsein als Energieträger zunehmend an Bedeutung. So werden bereits Lastkraftwagen, Busse, Personenkraftwagen und Lokomotiven mittels mit Erdgas- oder Wasserstoff-betriebenen Motoren bzw. mittels mit Wasserstoff versorgter Brennstoffzellen angetrieben. Darüber hinaus sind erste Versuche im Gange, Flugzeuge, Schiffe, U-Boote, etc. mit den genannten Medien anzutreiben.

Die Speicherung des Wasserstoffs oder Erdgases "an Bord" der oben genannten Verkehrsmittel ist dabei in flüssiger Form am sinnvollsten. Zwar müssen der Wasserstoff und LNG dazu auf etwa 25 K bzw. 112 K abgekühlt und auf dieser Temperatur gehalten werden - was nur durch entsprechende Isoliermaßnahmen an den Speicherbehältern bzw. -tanks realisiert werden kann -, doch ist eine Speicherung in gasförmigem Zustand aufgrund der geringen Dichte von GH₂ und CNG in der Regel in den obengenannten Verkehrsmitteln ungünstiger, da die Speicherung hierbei in großvolumigen und schweren Speicherbehältern bei hohen Drücken erfolgen muss.

Insbesondere die Speicherung von LH₂ kann in sinnvoller Weise nur in einem doppelwandigen, vakuumisolierten Speicherbehälter erfolgen. Derartige Speicherbehälter, wie sie heute bereits in Pkw's vorgesehen sind, weisen eine Vielzahl von potentiellen Undichtigkeitsstellen auf. Dies sind insbesondere die in den Innenraum des Speicherbehälters und damit durch den vakuumisolierten Zwischenraum führenden Leitungen sowie die in diesen angeordneten Ventile.

Eine Undichtigkeit im Vakuumraum und damit ein Zusammenbrechen des Vakuums hat zur Folge, dass es zu einer starken Verdampfung des LH₂ innerhalb des Speicherbehälters kommt. In diesem Fall muss - über entsprechend vorzusehende Sicherheitsventile - der verdampfte Wasserstoff aus dem Speicherbehälter abgeblasen werden.

Zwar sind bereits Vakuum(druck)messgeräte bekannt, die jedoch insbesondere aufgrund ihrer Störanfälligkeit im Fahrzeugbau als eher ungeeignet angesehen werden müssen; darüber hinaus sind diese Messgeräte vergleichsweise teuer.

Aufgabe der vorliegenden Erfindung ist es, ein Verfahren sowie eine Anordnung zum Überwachen des Zwischenraumvakuums eines doppelwandigen Behälters oder einer doppelwandigen Leitung anzugeben, das bzw. die bei einem geringen technischen Aufwand eine sichere Überwachung des Vakuums ermöglicht.

Das erfindungsgemäße Verfahren zeichnet sich nunmehr dadurch aus, dass mittels einer auf der Außenwand des doppelwandigen Behälters oder der doppelwandigen Leitung angebrachten Temperaturmessvorrichtung die Temperatur der Außenwand ermittelt wird.

Die erfindungsgemäße Anordnung zum Überwachung des Zwischenraumvakuums ist durch eine auf der Außenwand des doppelwandigen Behälters oder der doppelwandigen Leitung angeordnete Temperaturmessvorrichtung, die der Ermittlung der Temperatur der Außenwand dient, gekennzeichnet.

Die Überwachung des Zwischenraumvakuums erfolgt nunmehr nicht - wie bisher - mittels einer Druckmessung, sondem durch die Erfassung der Temperatur der Behälter- oder Leitungsaußenwand. Im Falle der Verschlechterung des Vakuums sinkt die Temperatur der Außenwand des doppelwandigen Behälters schnell ab, was durch die Erfassung der Behälter- oder Leitungsaußenwandtemperatur unmittelbar detektiert werden kann.

Das erfindungsgemäße Verfahren weiterbildend wird vorgeschlagen, dass zusätzlich zu dem mittels der auf der Außenwand des doppelwandigen Behälters oder der doppelwandigen Leitung angebrachten Temperaturmessvorrichtung ermittelten ersten Temperaturwert in der Umgebung des Behälters oder der Leitung ein zweiter Temperaturwert ermittelt und die beiden Temperaturwerte miteinander verglichen werden.

Die zu dieser Ausgestaltung entsprechende erfindungsgemäße Anordnung ist durch eine zusätzliche, in der Umgebung des Behälters oder der Leitung angeordnete Temperaturmessvorrichtung, die der Ermittlung eines zweiten Temperaturwertes dient, und eine Mess- oder Regeleinrichtung, die dem Vergleich der Temperatur der Außenwand und des zweiten Temperaturwertes dient, gekennzeichnet.

Kommt es zu einer Verschlechterung des Vakuums und einem damit verbundenen Absinken der Temperatur der Außenwand des doppelwandigen Behälters, so hat dies eine Änderung der Differenz zwischen den beiden ermittelten Temperaturwerten zur Folge. Kommt es nun zum Über- oder Unterschreiten eines voreingestellten bzw. -einstellbaren Temperaturdifferenzwertes wird ein entsprechendes (Warn)Signal generiert.

Ist der mit der erfindungsgemäßen Anordnung zum Überwachung des Zwischenraumvakuums versehene Speicherbehälter in einem Kfz angeordnet, so kann bei einer Verschlechterung des Zwischenraumvakuums unmittelbar eine Information an den Fahrer erfolgen und/oder auf das Kfz dahingehend eingewirkt werden, dass dieses beispielsweise so schnell als möglich zum Stillstand kommt und ggf. die Insassen aus Sicherheitsgründen das Fahrzeug verlassen können.

Das erfindungsgemäße Verfahren bzw. die erfindungsgemäße Anordnung zum Überwachung des Vakuums eines doppelwandigen Behälters und einer doppelwandigen Leitung greifen nicht unmittelbar in das Vakuum bzw. den Vakuumraum selbst ein. Das Verfahren bzw. die Anordnung können ohne großen Aufwand auch nachträglich installiert werden. Sie sind vergleichsweise technisch einfach aufgebaut sowie sehr funktionssicher und darüber hinaus relativ preiswert.

Unter Umständen kann es erforderlich und/oder zweckmäßig sein, die Temperaturmessvorrichtung an der Außenwand des Behälters bzw. der Leitung mit einer entsprechenden Wärmeisolierung zu versehen, um unerwünschte Temperatureinflüsse aus der Umgebung der Behälter- bzw. Leitungsaußenwand auf diese Temperaturmessvorrichtung zu unterbinden bzw. zumindest zu verringern.

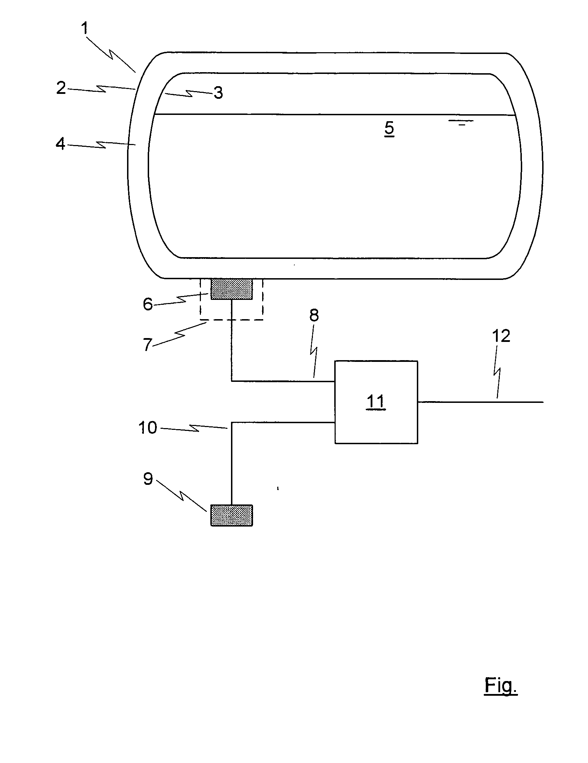

Das erfindungsgemäße Verfahren sowie die erfindungsgemäße Anordnung nebst weiteren Ausgestaltungen des- bzw. derselben sei nachfolgend anhand des in der Figur dargestellten Ausführungsbeispieles näher erläutert.

Die Figur zeigt eine schematisierte seitliche Schnittdarstellung durch einen Speicherbehälter 1 für kryogene Medien, insbesondere für LH₂, wie er bereits in Kraftfahrzeugen zum Einsatz kommt.

Der Speicherbehälter 1 besteht aus einem Außenbehälter 2 sowie einem Innenbehälter 3. Dieser umschließt den mit dem zu speichernden kryogenen Medium 5 befüllten Speicherraum. In der Figur nicht dargestellt sind der Übersichtlichkeit halber die erforderlichen Entnahme-/Befüllleitungen sowie Ventile. Zwischen den beiden Behältern 2 und 3 ist eine Vakuumisolierung bzw. ein Vakuum 4 vorgesehen.

Erfindungsgemäß wird auf der Außenwand 2 des Behälters 1 eine erste Temperaturmessvorrichtung 6 angeordnet. Mittels dieser kann kontinuierlich und/oder diskontinuierlich die Temperatur der Behälteraußenwand 2 ermittelt werden. Wie bereits erwähnt, ist die Temperaturmessvorrichtung 6 vorzugsweise von einer, sie gegen die Umgebung abschirmenden Wärmeisolation 7 umgeben.

Die Temperaturmessvorrichtung 6 steht über eine Datenleitung 8 mit einer Mess- und Regeleinrichtung 11 in Verbindung.

Eine zweite, in der Umgebung des Behälters 1 angeordnete Temperaturmessvorrichtung 9, die der Ermittlung des zweiten Temperaturwertes dient, ist über eine Datenleitung 10 ebenfalls mit der Mess- und Regeleinrichtung 11 verbunden.

Die Mess- und Regeleinrichtung 11 dient der Auswertung bzw. dem Vergleich der beiden mittels der Temperaturmessvorrichtungen 6 und 9 ermittelten Temperaturwerte. Sie kann wiederum über eine Datenleitung 12 mit dem Motormanagement und/oder dem Fahrer in Verbindung stehen, so dass eine unmittelbare Einflussnahme auf die Steuerung des Kraftfahrzeuges und/oder Information des Fahrers möglich ist.

Im Prinzip kann auf die zweite, in der Umgebung des Behälters 1 angeordnete Temperaturmessvorrichtung 9 sowie die zugehörige Datenleitung 10 verzichtet werden, da bereits die Erfassung bzw. Überwachung der Behälteraußenwandtemperatur mittels der Temperaturmessvorrichtung 6 eine sichere Überwachen des Vakuums bzw. Vakuumraumes 4 ermöglicht.

Das erfindungsgemäße Verfahren sowie die erfindungsgemäße Anordnung zum Überwachen des Zwischenraumvakuums eines doppelwandigen Behälters oder einer doppelwandigen Leitung sind unabhängig von der jeweiligen Anwendung des doppelwandigen Behälters bzw. der doppelwandigen Leitung einsetzbar.

## Patentansprüche

1. Verfahren zum Überwachen des Zwischenraumvakuums eines doppelwandigen Behälters, insbesondere eines Speicherbehälters für kryogene Medien, oder einer doppelwandigen Leitung, **dadurch gekennzeichnet, dass** mittels einer auf der Außenwand (2) des doppelwandigen Behälters (1) oder der doppelwandigen Leitung angebrachten Temperaturmessvorrichtung (6) die Temperatur der Außenwand (2) ermittelt wird.

2. Verfahren nach Anspruch 1, **dadurch gekennzeichnet, dass** bei einer Abweichung des an der Außenwand (2) ermittelten Temperaturwertes von einem eingestellten und/oder einstellbaren Temperaturwert ein Signal generiert wird.

3. Verfahren nach Anspruch 1, **dadurch gekennzeichnet, dass** zusätzlich zu dem mittels der auf der Außenwand (2) des doppelwandigen Behälters (1) oder der doppelwandigen Leitung angebrachten Temperaturmessvorrichtung (6) ermittelten ersten Temperaturwert in der Umgebung des Behälters (1) oder der Leitung ein zweiter Temperaturwert ermittelt und die beiden Temperaturwerte miteinander verglichen werden.

4. Verfahren nach Anspruch 3, **dadurch gekennzeichnet, dass** die beiden Temperaturwerte kontinuierlich oder diskontinuierlich verglichen werden.

5. Verfahren nach Anspruch 3 oder 4, **dadurch gekennzeichnet, dass** bei Über- oder Unterschreiten eines eingestellten und/oder einstellbaren Differenzwertes ein Signal generiert wird.

6. Anordnung zum Überwachen des Zwischenraumvakuums eines doppelwandigen Behälters, insbesondere eines Speicherbehälters für kryogene Medien, oder einer doppelwandigen Leitung, **gekennzeichnet durch** eine auf der Außenwand (2) des doppelwandigen Behälters (1) oder der doppelwandigen Leitung angeordnete Temperaturmessvorrichtung (6), die der Ermittlung der Temperatur der Außenwand (2) dient.

7. Anordnung nach Anspruch 6, **gekennzeichnet durch** eine zusätzliche, in der Umgebung des Behälters (1) oder der Leitung angeordnete Temperaturmessvorrichtung (9), die der Ermittlung eines zweiten Temperaturwertes dient, und eine Mess- oder Regeleinrichtung (11), die dem Vergleich der Temperatur der Außenwand (2) und des zweiten Temperaturwertes dient.

8. Anordnung nach Anspruch 6 oder 7, **dadurch gekennzeichnet, dass** die auf der Außenwand (2) des doppelwandigen Behälters (1) oder der doppelwandigen Leitung angeordnete Temperaturmessvorrichtung (6) Mittel zum Isolieren gegen die Umgebungstemperatur aufweist.

9. Anordnung nach einem der Ansprüche 6 bis 8, wobei der doppelwandige Behälter oder die doppelwandige Leitung in einem schienen- oder nichtschienengebundenen Fahrzeug, Flugzeug, Schiff, o.ä. vorgesehen sind, **dadurch gekennzeichnet, dass** die Mess- oder Regeleinrichtung (11) mit der Mess, Steuer und/oder Regeleinrichtung des schienen- oder nichtschienengebundenen Fahrzeuges, Flugzeuges, Schiffes, o.ä. in Wirkverbindung steht.
